# EUROPEAN PATENT APPLICATION

(11) **EP 1 482 406 A1**
(43) Date of publication of application: **01.12.2004**
(21) Application number: 03012033.1
(22) Date of filing: 28.05.2003
(51) Int. Cl.: G06F 9/445

(54) **A method of customizing an object by parametrising an application program**

(71) Applicant: SAP Aktiengesellschaft, 69190 Walldorf (DE)
(72) Inventor: Schmitt, Winfried, 69190 Walldorf (DE)
(74) Representative: Richardt, Markus, Dipl.-Ing.

(57) **Abstract**

The present invention relates to a method of customizing a customization object for an application program, the method comprising the steps of:
- displaying of names of one or more predefined parameter sets for the customization object which have been entered previously, if any,
- displaying of a first entry field for entering a name of an additional parameter set for the customization object,
- displaying of second entry fields for entering of the additional parameter set,
whereby a user can perform the customization either by selecting one of the names of the predefined parameter sets, if any, or by entering the additional parameter set and whereby the user has the option to enter a name for the additional parameter set.

## Description

### Field of the invention.

The present invention relates to the field of data processing systems, and more particularly to customization.

### Background and prior art

Computer systems typically include operating system software that controls the basic function of the computer, and one or more software application programs that run under the control of the operating system to perform desired tasks. As the capabilities of computer systems have increased, the application programs designed for these high performance systems have become more powerful. Additionally, application program development costs have continued to rise because of the ever increasing complexity of these programs.

One way in which the performance of application software programs has been improved while the associated development costs have been limited is by using object-oriented programming concepts. The goal of using object-oriented programming is to create small, reusable sections of program code known as "objects" that can be quickly and easily combined and re-used to create new programs. The modular and re-usable aspects of objects will typically speed development of new programs, thereby reducing the costs associated with the development cycle. In addition, by creating and re-using a group of well-tested objects, a more stable, uniform, and consistent approach to developing new computer programs can be achieved.

Object oriented technology is also used to enable customizing for application programs. An application program can be based on one or more customizing objects. A user can create an instance of the customizing object of an application program by entering a set of parameters. Such a parameter set is also referred to as 'customizing setting' or 'user preferences'.

For example, before customers can run an SAP R/3 System several system parameters must be set for customizing of the applications. The parameter sets of the customizing are stored in database tables.

Complex application programs can have more than hundred customizing objects for customizing various functionalities, such as printing, communication, email filtering, or for specifying a group of companies with whom business transactions can be performed.

In view of the many customizing objects used by complex application programs there is a need to provide an improved method for customizing.

### Summary of the invention

The present invention provides for a method of customizing a customization object for an application program. In essence, a user has two different options for specifying a parameter set for the customizing:
i. The user can specify the parameter set by making reference to a parameter set which has been entered in a previous customization, or
ii. The user can enter an additional parameter set, if none of the previously entered parameter sets fits the particular purpose.

In case (ii) the user has the further option to assign a name to the additional parameter set such that reference can be made to the additional parameter set in a subsequent customization.

This has the advantage that identical parameter sets which are used for instantiating the same customization object for various application programs need only to be entered once. When a user needs to instantiate the customization object for a given application program he or she only needs to select the name of the previously entered parameter set rather than re-entering the parameter set.

On the other hand the user is not restricted to use pre-defined parameter sets. On the contrary the user is free to enter a special parameter set if none of the previously entered parameter sets fit the intended purpose. In case a specific parameter set serves a very special purpose, the user can decide not to assign a name to the specific parameter set. If the user intends to re-use the parameter set in a subsequent customization of the customization object for another application program, the user can enter a name for the parameter set such that the parameter set can be selected by making reference to its name in a subsequent customization.

In accordance with a preferred embodiment of the invention, a database table is stored for each customization object of a set of customization objects. The database table of a customization object contains a number of parameter sets. Each one of the parameter sets creates an instance of the customization object.

A key is assigned to each one of the parameter sets for retrieval of the parameter set in the database table. Further, there is a mapping table for each one of the application programs which maps customization objects used by the application to keys of parameter sets. This way an application program which requires access to an instance of a customization object can access the corresponding parameter set stored in the database table through the mapping table by looking up the key which is assigned to the customization object. Preferably a global unique identifier (GUID) is generated as a key for each parameter set.

The names which a user has assigned to some of the parameter sets can also be stored in the database tables. When a user selects a parameter set for customization by making reference to its name, it is not necessary that the parameter set is duplicated. Preferably the key which is assigned to the parameter set is stored in the mapping table of the corresponding application program. As a consequence multiple application programs can reference the same parameter set through their respective mapping tables.

In accordance with a further preferred embodiment of the invention the customization objects form the basis for generating of dialogue windows or dialogue boxes. A dialogue window of a customization object has a display field for displaying the names of parameter sets which have been entered previously, if any. The list of names can be shown in a pull-down menu or the like.

Further the dialogue window has an entry field for entering of a new name of an additional parameter set which the user can enter in other entry fields of the dialogue window. This gives the user the option to either select a parameter set by clicking on one of the names in the pull-down menu list or by entering an additional parameter set in the entry fields of the dialogue window. In the latter case the user can enter a name for the additional parameter set if he or she has the intention to re-use the additional parameter set in a subsequent customization for the same or another application program.

### Brief description of the drawings

In the following preferred embodiments of the invention will be described in greater detail by making reference to the drawings in which:
- Figure 1: is a block diagram of a preferred embodiment of a data processing system of the invention,
- Figure 2: is illustrative of an embodiment of a method of the invention,
- Figure 3: is illustrative of an example for a dialogue box.

### Detailed description

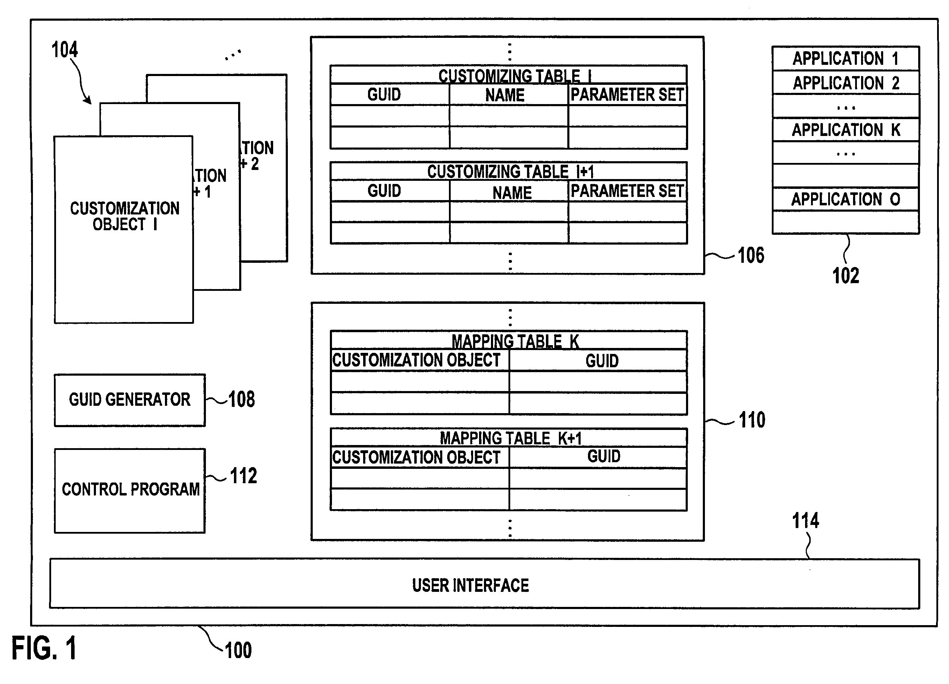

Figure 1 shows data processing system 100 which has set 102 of application programs i.e. application 1, application 2,..... application k, .......application o. The application programs of set 102 use a set 104 of m customization objects, i.e. customization object 1, customization object 2,......customization object i,.....customization object m. Each one of the application programs of set 102 uses at least a sub-set of set 104 of the customization objects.

Data processing system 100 has storage area 106 for storing of database tables for the customization objects of set 104. For each customization object i there is a corresponding customizing table I in which alternative parameter sets for instantiating customization object i are stored. By way of example Figure 1 shows customizing table i for customization object i and customizing table i + 1 for customization object i + 1.

Each parameter set stored in the database tables of storage area 106 has a key. In the example considered here the key is a GUID which has been generated by GUID generator 108. In addition a name can be entered for a parameter set in a customizing table of storage area 106. Entering a name is however optional.

Further, data processing system 100 has storage area 110 for storage of mapping tables. In storage area 110 a mapping table is stored for each one of the application programs of set 102. By way of example mapping table k of application program k and mapping table k + 1 of application program k + 1 are shown in figure 1.

Mapping table k has an entry for each customization object of the sub-set of set 104 used by application program k. Each customization object of this sub-set is related to a key, which is a GUID in the example considered here. The GUID is used as a key in order to retrieve a parameter set from one of the customizing tables having the same GUID as entered in the mapping table k.

Likewise mapping table k + 1 has an entry for each one of the customization objects of the sub-set of set 104 of customization objects used by application program k + 1. Again, the GUIDs entered for the individual customization objects in mapping table k + 1 are used as keys for retrieval of the corresponding parameter sets in the customizing tables of storage area 106.

Further, data processing system 100 has control program 112 which can be a part of the operating system of data processing system 100. Control program 112 manages the communication between the application programs of set 102 and the customizing tables and the mapping tables.

By means of user interface 114 a user can perform the customizing and work with the application programs.

In operation the user selects one of the application programs of set 102. In the selected one of the application programs the user opens a dialogue box for customizing one of the customization objects of the sub-set of set 104 used by the selected one of the applications. The user can enter a parameter set in the dialogue window for instantiating the customization object. The parameter set is stored in the customizing table of the customization object and a key is assigned to the parameter set by GUID generator 108. As an option the user can enter a name for the parameter set in the dialogue box which is also stored in the customizing table.

The key which has been assigned to the parameter set is stored in the mapping table of the selected one of the application programs in conjunction with the customization object.

Alternatively the user can perform the customizing by re-using previously entered parameter sets which have been named by the user. For this purpose a list of the names stored in the customizing table being assigned to the customizing object is displayed. The user can select one of the names in order to specify the corresponding parameter set as an instance of the customization object. In this case the user does not need to enter the parameter set but the key being assigned to the parameter set is entered by the control program 112 in the mapping table of the selected one of the applications in conjunction with the customization object.

When an application program is executed by data processing system 100 the application program might require usage of one of its customization objects. In this case the application program performs a look-up operation in its mapping table in order to determine the GUID being assigned to the required customization object. The GUID is used as a key for retrieval of the parameter set which has been assigned to the GUID. This parameter set is used by the application program as an instance of the required customization object.

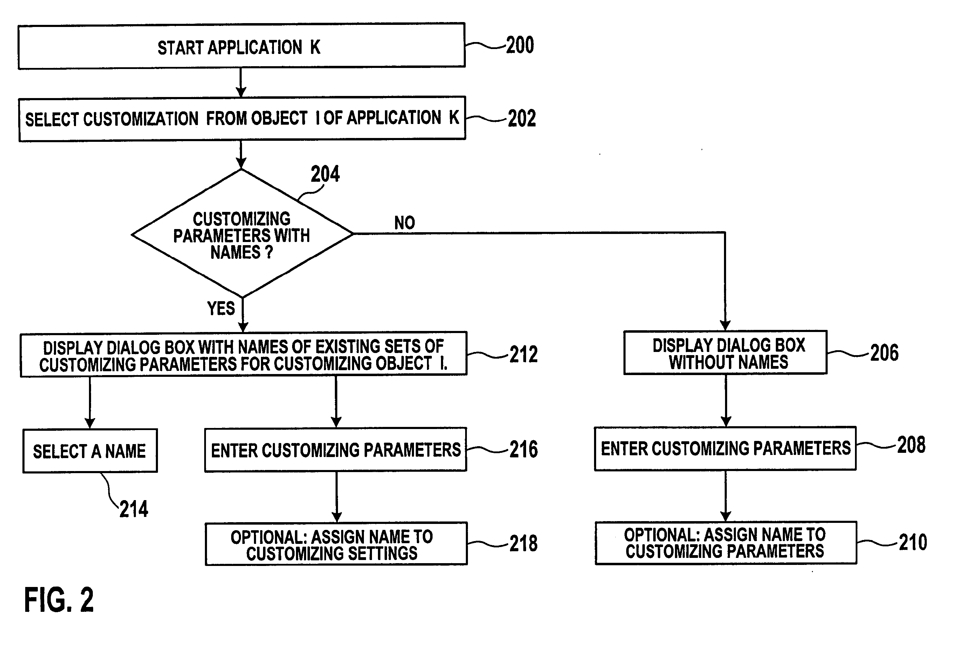

Figure 2 shows a corresponding flow chart. In step 200 application program k is started by the user. In step 202 the user opens a dialogue window for customizing of customization object i which is used by the application program k. Typically this is done by selecting a corresponding item from an action bar of application program k which opens the dialogue box.

In step 204 it is determined whether there are named parameter sets in customizing table I of customization object I. If this is not the case the control goes to step 206 where the dialogue box is displayed without names of previously entered parameter sets. In step 208 the user enters a customizing parameter set in the corresponding entry fields of the dialogue box. In response a key is generated for the additional parameter set and the parameter set is stored in the customizing table i in conjunction with the key.

Further, the user can enter a name for the additional parameter set in set 210. If the user decides to do so the name is also stored in customizing table i in conjunction with the key and the parameter set entered in step 208.

If it is determined in step 204 that there are named parameter sets in customizing table i the control goes to step 212, rather than to step 206. In step 212 the dialogue box is displayed with the names of the previously entered parameter sets stored in customizing table i of customization object i. Now the user has two options for the customizing:
- The user can select one of the names in step 214. By selecting a particular name the user selects the previously stored parameter set being assigned to this name for customizing of the customizing object i for application program k.
- If the user decides that none of the named previously entered parameter sets stored in customizing table i are appropriate for the customizing for application program k, the user enters an additional parameter set in step 216. In response a GUID is generated for the additional parameter set and the parameter set is stored in customizing table i in conjunction with the GUID as an additional entry. In step 218 the user has the option to assign a name to the additional parameter set. If the user decides to do so the name is also stored in customizing table i in conjunction with the parameter set entered in step 216.

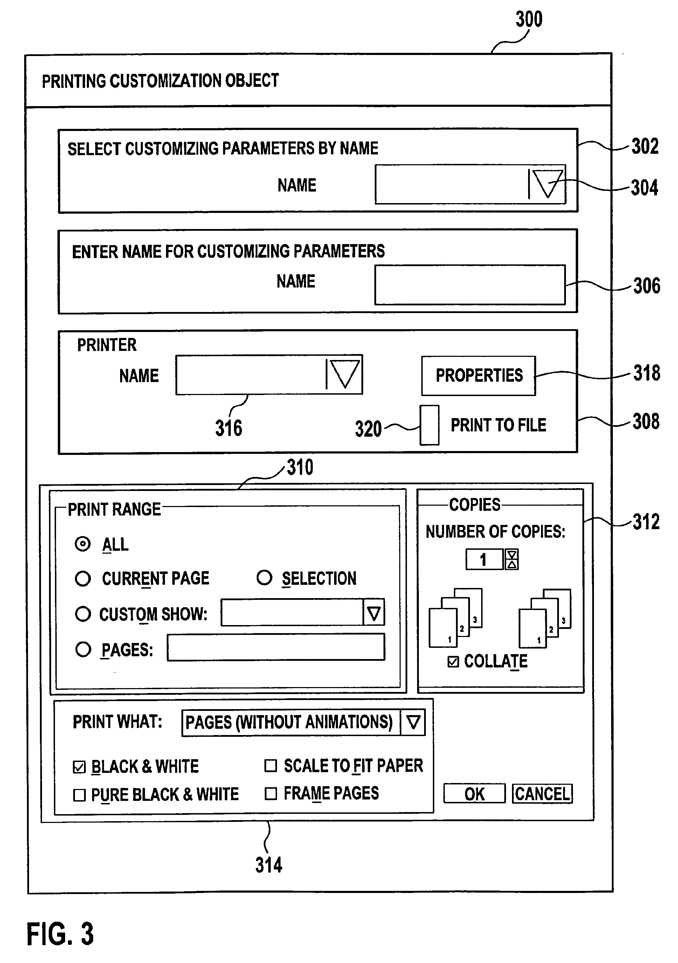

Figure 3 shows an example for a dialogue box 300. Dialogue box 300 is a representation of a customization object for printing.

Dialogue box 300 has pull-down menu 302 which is only shown if there are named parameter sets in the customizing table of the printing customization object. If there are such named parameter sets the user gets a list of the names by clicking on arrow 304. By clicking on one of the names of the list the user can perform the customizing.

Further, dialogue box 300 has entry field 306 for entering a name of a additional parameter set which can be entered by a user in entry fields 308, 310, 312 and 314. Entry field 308 has pull-down menu 316 for selecting a printer and button 318 which invokes a sub-dialogue for specifying the properties of the selected printer. Further entry field 308 has selection box 320 which enables to select 'print to file'.

Entry field 310 serves to enter the print range. Entry field 312 serves to specify the number of copies to be printed and entry field 314 serves to specify what is to be printed and further printing parameters like 'black and white', 'scale to fit paper', .....

If there are named parameter sets for the printing customization object which have been previously entered for other application programs a list of the names is shown in pull-down menu 302 which enables the user to select one of the names for the customizing. If the user decides that none of the named parameter sets of pull-down menu 302 is appropriate, he or she can enter an additional parameter set by means of entry fields 308, 310, 312, and 314. As an option the user can enter a name for the additional parameters set in entry field 306.

When the user clicks on the "OK" - button dialogue box 300 the additional parameter set which has been entered in entry fields 308, 310, 312, 314 is stored in the customizing table of the printing customization object and a key for the additional parameter set is generated and stored in conjunction with the additional parameter set for later retrieval. If a name has been entered in entry field 306 the name is also stored in conjunction with the additional parameter set in the customizing table of printing customization object.

When the user has entered an additional parameter set and a name for the additional parameter set this enables re-use of the additional parameter set in a subsequent customizing of printing customization object. When dialogue box 300 is opened the next time the name which has been given to the additional parameter set by the user shows up in pull-down menu 302 and can be selected in the subsequent customizing for another one of the application programs.

It is important to note that pull down menu 302 and entry field 306 can be merged into a single display/entry field. In this case the names are displayed in the same field into which the user can optionally enter a new name for an additional parameter set.

### List of Reference Numerals

- 100: data processing system
- 102: set of application programs
- 104: set of customization objects
- 106: storage area
- 108: GUID generator
- 110: storage area
- 112: control program
- 114: user interface
- 300: dialogue box
- 302: pull down menu
- 304: arrow
- 306: entry field
- 308: entry field
- 310: entry field
- 312: entry field
- 314: entry field
- 316: pull down menu
- 318: button
- 320: selection box

## Claims

1. A method of customizing a customization object for an application program, the method comprising the steps of:
- displaying of names of one or more predefined parameter sets for the customization object which have been entered previously, if any,
- displaying of a first entry field for entering a name of an additional parameter set for the customization object,
- displaying of second entry fields for entering of the additional parameter set,
whereby a user can perform the customization either by selecting one of the names of the predefined parameter sets, if any, or by entering the additional parameter set and whereby the user has the option to enter a name for the additional parameter set.

2. The method of Claim 1, whereby a number of application programs use a common set of customization objects.

3. The method of Claim 1 or 2, further comprising performing a database query for determining the names of the one or more predefined parameter sets for the customization object.

4. The method of Claim 3, whereby the database has a table or file for each customization object for storing parameter sets of a customization object.

5. The method of any one of the preceding claims 1 to 4, whereby each parameter set has a key and each application program has a mapping table for mapping of customization objects to keys.

6. The method of Claim 5, further comprising entering the key of a predefined parameter set into the mapping table, if the name of the predefined parameter set is selected by the user.

7. The method of Claim 5 or 6, whereby the key is a global unique identifier.

8. Computer program product, in particular digital storage medium, for customizing a customization object for an application program, the computer program product comprising program means for performing the steps of:
- displaying of names of one or more predefined parameter sets for the customization objects which have been entered previously, if any,
- displaying of a first entry field for entering a name of an additional parameter set for the customization object,
- displaying of second entry fields for entering of the additional parameter sets,
- enabling a user to perform the customization either by entering a selection of one of the names of the predefined parameter sets, if any, or by entering of the additional parameter set in the second entry fields, whereby an optional entry of a name for the additional parameter set in the first entry field is enabled.

9. The computer program product of Claim 8, the program means being adapted to perform a database query for determining the names of the one or more predefined parameter sets.

10. The computer program product of Claims 8 or 9, the program means being adapted to store the additional parameter set in a table or file being assigned to the customization object.

11. The computer program product of Claims 8, 9 or 10, the program means being adapted to generate a key for the additional parameter set and for entering the key in a mapping table relating the customization object of the application program to the key for retrieval of the parameter set being assigned to the key.

12. The computer program product of Claim 11, the program means being adapted to enter the key being assigned to a predefined parameter set which has been selected by selection of its name in the mapping table.

13. A data processing system comprising:
- a set of customization objects (104) for a number of application programs (102),
- means (106, 110) for storing of parameter sets for each customization object, each parameter set being assigned to one or more of the application programs, and at least some of the parameter sets having assigned names for usage as a reference for entering of an additional customization.

14. The data processing system of Claim 13, further comprising a mapping table (110) for each one of the application programs, each mapping table assigning parameter sets to customization objects of an application program.

15. The data processing system of Claims 13 or 14, further comprising means (108) for generating of global unique identifiers, and means (112) for assigning of global unique identifiers to the parameter sets as keys.

16. The data processing system of any one of the preceding claims 13 to 15, further comprising a graphical user interface (114) for displaying of a dialogue window (300) for displaying (302, 304) of the names of parameter sets, displaying of a first entry field (306) for entering a name of an additional parameter set for a customization object, and for displaying of second entry fields (308, 310, 312, 314) for entering of the additional parameter set.
